# DEMANDE DE BREVET EUROPEEN

(11) **EP 0 587 524 A1**
(43) Date de publication de la demande: **16.03.1994**
(21) Numéro de dépôt: 93810012.0
(22) Date de dépôt: 12.01.1993
(51) Int. Cl.: A23G 9/28, A23G 7/00, B26D 3/24, B26D 7/08, A21C 15/04

(54) **Dispositif pour le découpage de tartes**

(30) Priorité: 28.07.1992 CH 2374/92
(71) Demandeur: Lardi, Mario, CH-1228 PLAN-LES-OUATES (CH)
(72) Inventeur: Lardi, Mario, CH-1228 PLAN-LES-OUATES (CH)
(74) Mandataire: Meylan, Robert Maurice

(57) **Abrégé**

Le dispositif est constitué, d'une part, d'un plateau circulaire (20) présentant des rainures radiales (21) et, d'autre part, d'un cadre circulaire (22) sur lequel sont fixées des lames radiales (23) légèrement inclinées radialement. La hauteur totale des lames est inférieure ou égale à la profondeur des rainures, de manière à permettre de noyer complètement les lames dans les rainures lorsqu'on découpe une tarte. L'inclinaison des lames facilite la coupe et s'oppose à un étalement de la pâte.

## Description

La présente invention a pour objet un dispositif pour le découpage de tartes et gâteaux de forme circulaire en tranches en forme de secteurs.

Le découpage d'une tarte ou d'une pizza au moyen d'un couteau est une tâche fastidieuse. Il est en outre difficile d'obtenir des tranches régulières. Dans le cas de la restauration et de la fabrication cette opération devient vite fatiguante pour la personne qui en est chargée et elle nécessite en outre beaucoup de temps.

L'invention a pour but de réaliser un dispositif permettant de découper instantanément et sans fatigue des tranches parfaitement régulières.

Le dispositif selon l'invention est caractérisé par le fait qu'il comprend, d'une part, un cadre circulaire sur lequel sont fixées des lames radiales définissant des secteurs angulairement équidistants, ces lames étant inclinées du centre du cadre vers sa périphérie et, d'autre part, un plateau circulaire de diamètre inférieur au diamètre intérieur du cadre et présentant des rainures radiales s'étendant à partir du centre du plateau jusqu'au bord du plateau et définissant des secteurs correspondant, notamment, aux secteurs définis par les lames du cadre, la profondeur desdites rainures étant au moins égale à la hauteur totale des lames, de telle manière que lorsque le cadre est abaissé autour du plateau, les lames du cadre s'engagent totalement dans les rainures radiales du plateau.

Pour couper une tarte il suffit de disposer la tarte sur le plateau puis de découper la tarte en pressant sur le cadre de telle sorte que les lames découpent la tarte en pénétrant dans les rainures du plateau jusqu'à ce qu'elles soient complètement noyées, permettant ainsi d'enlever les tranches découpées au moyen d'une pelle.

Le dessin annexé représente, à titre d'exemple, une forme d'exécution de l'invention.

La figure 1 est une vue en plan du plateau.

La figure 2 est une vue de détail en coupe selon II-II de la figure 1.

La figure 3 est une vue en plan du cadre.

La figure 4 représente les lames du cadre engagées dans les rainures du plateau.

La figure 5 représente le levier auxiliaire en position hors service.

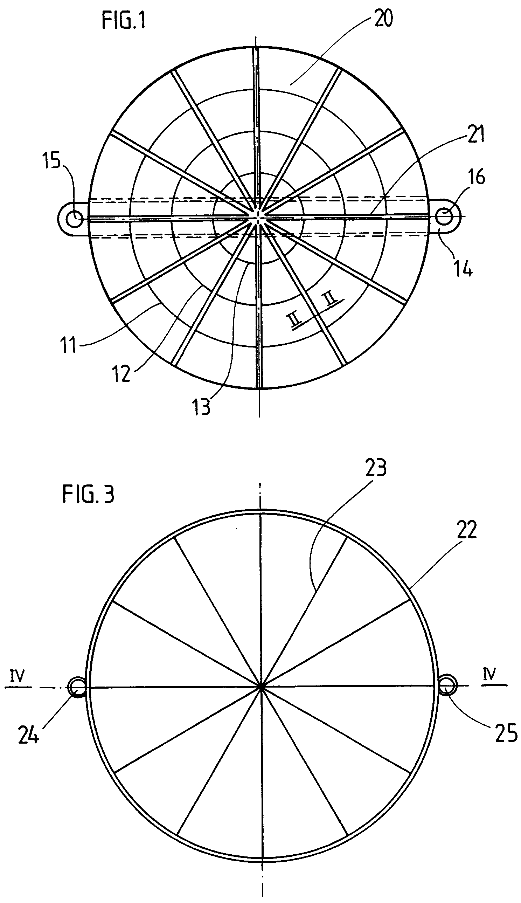

La figure 1 représente un plateau circulaire 20 pourvu de douze rainures radiales 21 divisant la surface du plateau en douze secteurs réguliers.

Sur le plateau 1 sont en outre tracés quelques cercles concentriques tels que 11, 12, 13 centrés sur le centre du plateau. La face inférieure du plateau présente une rainure diamétrale dans laquelle est fixée une traverse métallique 14 dont les extrémités débordant le plateau portent deux colonnes 15 et 16.

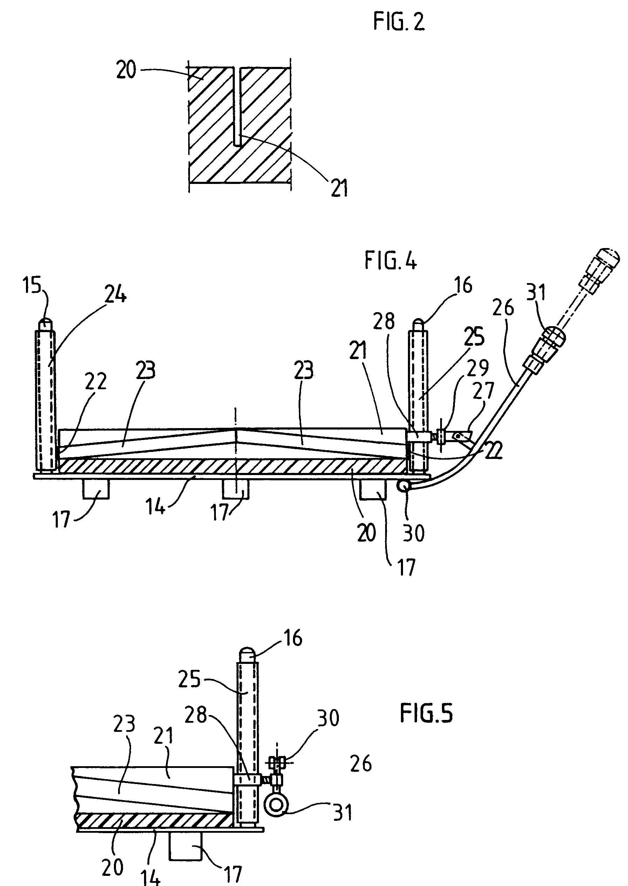

La figure 3 représente un cadre circulaire 22 muni de douze lames radiales 23 divisant le cadre en douze secteurs réguliers. Le diamètre intérieur du cadre 22 est très légèrement supérieur au diamètre extérieur du plateau 20. Le cadre 22 est en outre muni de deux poignées verticales tubulaires 24 et 25. Comme ceci est visible à la figure 4, les lames 23 sont inclinées du centre du cadre vers sa périphérie. Cette inclinaison est d'environ 6° dans l'exemple considéré. La hauteur totale des lames, c'est-à-dire la hauteur entre le point le plus bas et le point le plus haut de ces lames, est égale à la profondeur des rainures 21.

Le cadre 22 peut être équipé d'un dispositif auxiliaire constitué d'un levier auxiliaire 26 articulé sur un bras 27 articulé autour d'un axe vertical sur un support 29 solidaire d'une bague 28 fixée sur le tube 25. Le bras inférieur du levier 26 est recourbé et muni à son extrémité d'une paire de galets 30 qui vient prendre appui sur la traverse métallique 14 en position d'utilisation. Le levier est muni d'une poignée 31 et il est en outre télescopique de manière à pouvoir augmenter le bras de levier si nécessaire.

Lorsque le levier auxiliaire n'est pas utilisé, il peut être placé de côté par pivotement sur le support 29 comme représenté à la figure 5.

Etant donné les diamètres respectifs du cadre 22 et du plateau 20, les lames 23 peuvent être engagées dans les rainures 21, le cadre 22 venant entourer le plateau 20.

Le dispositif s'utilise comme suit :

La tarte à découper est placée sur le plateau 20 sur lequel elle est centrée au moyen des cercles concentriques 11, 12, 13. Le cadre 22 est engagée par ses tubes 24 et 25 sur les colonnes 15 et 16 du plateau 20. Le cadre circulaire 22, positionné angulairement par les colonnes 15 et 16, est pressé sur la tarte au moyen du levier auxiliaire de telle manière que les couteaux 23 traversent la tarte et s'engagent dans les rainures 21 avec un jeu très faible. La tarte se trouve ainsi découpée en tranches régulières. Comme on peut le voir à la figure 4, les lames 23 sont alors noyées dans le plateau 20 de telle sorte que les tranches de tarte peuvent être enlevées aisément du plateau au moyen d'une pelle.

L'inclinaison des lames 23 a deux effets favorables. D'une part, elle facilite la coupe, en raison du découpage progressif de l'extérieur vers le centre, réduisant ainsi la pression nécessaire. D'autre part, elle empêche l'étalement de la pâte lors de la coupe, en repoussant celle-ci vers le centre.

Pour découper une tarte ou une pizza en un nombre de tranches inférieur à douze, on utilise un cadre comportant un nombre de lames inférieur à douze, par exemple six ou quatre lames.

Le cas échéant il est possible d'exercer une pression suffisante sur le cadre sans l'aide du levier auxiliaire.

Le plateau 20 peut être exécuté en tout matériau, mais de préférence en plastique alimentaire.

## Revendications

1. Dispositif pour le découpage de tartes et gâteaux de forme circulaire en tranches en forme de secteurs, caractérisé par le fait qu'il comprend, d'une part, un cadre circulaire (22) sur lequel sont fixées des lames radiales (23) définissant des secteurs angulairement équidistants, ces lames étant inclinées du centre du cadre vers sa périphérie, et, d'autre part, un plateau circulaire (20) de diamètre inférieur au diamètre intérieur du cadre et présentant des rainures radiales (21) s'étendant à partir du centre du plateau jusqu'au bord du plateau et définissant des secteurs correspondant, notamment, aux secteurs définis par les lames du cadre, la profondeur desdites rainures (21) étant au moins égale à la hauteur totale des lames, de telle manière que lorsque le cadre est abaissé autour du plateau, les lames du cadre s'engagent totalement dans les rainures du plateau.

2. Dispositif selon la revendication 1, caractérisé par le fait que le plateau (20) est muni de deux colonnes (15, 16) et que le cadre (22) est munis de deux poignées tubulaires (24, 25) destinées à être engagées sur les colonnes (15, 16) pour le guidage du cadre.

3. Dispositif selon la revendication 2, caractérisé par le fait qu'il est équipé d'un levier auxiliaire (26) articulé sur un suport (27) muni de moyens de fixation sur l'une des poignées tubulaires (24, 25) du cadre.

4. Dispositif selon lar evendication 3, caractérisé par le fait que le levier auxiliaire est muni d'un galet (30) prenant appui sur la face inférieure du plateau.
